# EUROPÄISCHE PATENTSCHRIFT

(11) **EP 3 250 515 B1**
(45) Veröffentlichungstag und Bekanntmachung des Hinweises auf die Patenterteilung: **07.09.2022**
(21) Anmeldenummer: 16703603.7
(22) Anmeldetag: 27.01.2016
(51) Int. Cl.: C02F 1/34, C02F 1/44, F24D 17/00, C02F 1/32

(54) **WASSERAUFBEREITUNGSSYSTEM**
WATER TREATMENT SYSTEM
SYSTÈME DE TRAITEMENT DE L'EAU

(30) Priorität: 27.01.2015 AT 192015 U
(43) Veröffentlichungstag der Anmeldung: 06.12.2017
(73) Patentinhaber: Luca, Genoveva Daniela, 82110 Germering (DE)
(72) Erfinder: KOCH, Peter, 7423 Pinkafeld (AT)
(74) Vertreter: Keschmann, Marc
(86) Internationale Anmeldenummer: PCT/IB2016/000052
(87) Internationale Veröffentlichungsnummer: WO 2016/120709

(56) Entgegenhaltungen:
- CH-B1- 697 379
- DE-A1-102006 045 773
- DE-U1-202007 015 082

## Beschreibung

Die Erfindung betrifft ein Wasseraufbereitungssystem mit einem Kaltwasserzulauf, der in einen Zirkulationskreislauf mündet, wobei der Zirkulationskreislauf wenigstens einen Erhitzer und wenigstens eine Kavitationseinheit umfasst, wobei der Kaltwasserzulauf dem Erhitzer in Strömungsrichtung vorgeordnet ist.

Ein solches Wasseraufbereitungssystem ist in der WO 2011/023767 A2 und der der DE 102006045773 A1 beschrieben. Das Wasseraufbereitungssystem gemäß der DE 102006045773 A1 kann zusätzlich zur Kavitationseinheit eine chemische Behandlungsstufe durch Einbringung eines Oxidationsmittels umfassen.

Das Dokument CH 697379 B1 offenbart eine Einrichtung zur Aufbereitung, Speicherung und Verteilung einer Warmwassermenge, welche unter anderem ein Filter umfasst.

Das bekannte Wasseraufbereitungssystem umfasst einen Zirkulationskreislauf, in dem ein Erhitzer, ein Kavitator und ggf. ein Warmwasserspeicher angeordnet sind. Der Kavitator ist dabei im Rücklauf des Zirkulationskreislaufs angeordnet und dem Warmwasserspeicher in Strömungsrichtung vorgeordnet. Zwischen dem Warmwasserspeicher und dem Erhitzer ist in Strömungsrichtung ein Kaltwasserzulauf angeordnet. Im Kavitator erfolgt eine Reinigung des im Zirkulationskreislauf zirkulierenden Warmwassers, wobei vor allem biologische Verunreinigungen, die insbesondere Legionellenwachstum fördern, reduziert werden.

Wenn an den Entnahmestellen Warmwasser aus der Warmwasserzirkulation entnommen wird, wird die entsprechende Menge an Kaltwasser dem Zirkulationskreislauf nachgeführt und im Erhitzer erwärmt. Bei länger andauernder Warmwasserentnahme ergibt sich allerdings die Problematik, dass das nachgeführte Kaltwasser nach seiner Erwärmung im Zirkulationskreislauf eine geringe Verweildauer aufweist, weil es sofort wieder entnommen wird. Dadurch wird das nachgeführte, erwärmte Wasser nur zu einem geringen Anteil durch den Kavitator geleitet bzw. es wird dadurch die Anzahl der Kavitationsbehandlungen im Zirkulationskreislauf reduziert.

Ein ähnliches Problem ergibt sich bei einer Ausbildung, bei der ein Warmwasserspeicher im Zirkulationskreislauf angeordnet ist. Der Warmwasserspeicher bildet dabei einen Puffer, der wirksam wird, wenn die Menge des entnommenen Warmwassers die nachgeführte Kaltwassermenge übersteigt. Wenn aber der Warmwasserspeicher durch eine erhöhte Entnahmemenge des Warmwassers leergelaufen ist, wird das nachgeführte Kaltwasser nach dem anschließenden Erwärmen durch den Erhitzer direkt der Entnahmestelle zugeführt. Eine ausreichend lange Verweildauer des Kaltwassers im Zirkulationskreislauf ist also nicht gegeben, so dass keine sichere Entkeimung bzw. ausreichende Reduktion von biologischen Verunreinigungen gewährleistet werden kann. Diese Problematik trifft auch dann teilweise zu, wenn der Warmwasserspeicher gefüllt ist und entsprechend eine Pufferfunktion wahrnimmt. Konkret kann bei dem bekannten Wasseraufbereitungssystem auch bei gefülltem Warmwasserspeicher nicht ausgeschlossen werden, dass ein Kaltwasseranteil, der dem Warmwasserspeicher über den Kavitator zugeführt wird, sofort in die Warmwasserzirkulation geleitet wird.

Beim Gegenstand der WO 2011/023767 A2 wurden die oben dargestellten Probleme zumindest teilweise dadurch gemindert, dass eine Ultrafiltrationseinheit im Kaltwasserzulauf angeordnet ist. Dadurch können biologische Verunreinigungen aus dem Kaltwasser entfernt werden, bevor das Kaltwasser in den Zirkulationskreislauf gelangt.

Es besteht aber weiterhin das Problem von Inkrustationspartikeln, die beispielsweise durch Ablösung von Partikeln der an den Rohrwänden anhaftenden Inkrustation entstehen. Der Kavitator ist nicht in der Lage, Inkrustationspartikel zu beseitigen, die im Zirkulationskreislauf vom darin fließenden Wasser mitgeschleppt werden. Der Kavitator begünstigt im Gegenteil die Ablösung von Inkrustationspartikeln von den Rohrwänden, wobei solche abgelösten Inkrustationspartikel wiederum neue Lebensräume für Mikroorganismen darstellen, womit eine Biofilmentstehung begünstigt wird.

Die Bildung von Inkrustationspartikeln ist besonders bei Wasseraufbereitungssystemen ein großes Problem, die im Zuge einer Sanierung in bestehende Anlagen eingebaut werden. In einem solchen Fall begünstigt der Kavitator die Ablösung von Partikeln aus der bestehenden Inkrustation der Rohrwände.

Unter Inkrustationen eines Rohrleitungssystems versteht man die Anlagerung eines Verbundes aus Schmutz und Mineralien an den Innenwänden des Rohres. Insbesondere in Gebieten, in welchen kalkhaltiges Trinkwasser genutzt wird, ist die Gefahr von Inkrustationen hoch. Die im Wasser gelösten Mineralien fallen bei bestimmten Bedingungen aus und lagern sich an den Innenwänden von Rohrleitungssystemen an.

Als Biofilm wird eine dünne Schleimschicht bezeichnet, in welcher Mikroorganismen (wie bspw. Bakterien, Pilze, Algen, Protozoen) eingebettet sind. Biofilm entsteht, wenn sich Mikroorganismen an Grenzflächen ansiedeln. In Rohrleitungssystemen stellen Inkrustationen ideale Bedingungen für die Bildung von Biofilm dar. Das Vorhandensein von Biofilm begünstigt die Ansiedelung von Legionellen. Der Biofilm dient den Legionellen einerseits als Schutz in den Rohrleitungen und bietet ihnen andererseits einen optimalen Lebensraum und Nährboden.

Der vorliegenden Erfindung liegt somit die Aufgabe zugrunde, ein Wasseraufbereitungssystem der eingangs genannten Art hinsichtlich der oben beschriebenen Probleme zu verbessern. Insbesondere zielt die Erfindung darauf ab, ein Wasseraufbereitungssystem zu schaffen, das für die Sanierung von bestehenden, mit Inkrustationen behafteten Anlagen geeignet ist und das unabhängig von der jeweiligen Wassertemperatur arbeitet.

Zur Lösung dieser Aufgabe besteht die Erfindung bei einem Wasseraufbereitungssystem der eingangs genannten Art im Wesentlichen darin, dass wenigstens eine Ultrafiltrationseinheit mit einer Ausschlussgrenze von 0,01-0,05 µm, insbesondere 0,03 µm, im Zirkulationskreislauf angeordnet ist. Die Ultrafiltrationseinheit trennt die im Wasser schwimmenden Inkrustationspartikel einschließlich der Biofilmbestandteile bereits nach einem einmaligen Durchlauf durch das Filter ab und diese werden dadurch aus dem Zirkulationskreislauf entfernt. Im Gegensatz dazu weist die Kavitationseinheit sogar nach 3-maligem Durchlauf eine Entkeimungsleistungen von lediglich 50% auf.

Die Effizienz der Wasseraufbereitung wird auf diese Weise erhöht. Überdies ermöglicht die Filtration die Verwendung von kleineren Pumpen im Zirkulationskreislauf, da mit Rücksicht auf die Wirkung der Ultrafiltrationseinheit eine reduzierte Anzahl an Kavitationsbehandlungen in der Kavitationseinheit für eine effiziente Reinigung ausreicht. Das bedeutet, dass durch die Ultrafiltrationseinheit die Durchflussrate im Zirkulationskreislauf reduzierbar ist. Außerdem gelingt mit dem erfindungsgemäßen Wasseraufbereitungssystem eine überaus rasche Entkeimung, einschließlich einer Ablösung und Abtrennung von Inkrustationen, von verkeimten und verkrusteten Altsystemen im Zuge von Sanierungsmaßnahmen.

Das erfindungsgemäße Wasseraufbereitungssystem bildet somit eine doppelte Barriere für biologische Verunreinigungen, insbesondere für Legionellen. Die Qualität des aufbereiteten Wassers, insbesondere Trinkwassers, wird durch die erfindungsgemäße Weiterentwicklung effizient gesteigert.

Die Kavitation löst hierbei sowohl den Biofilm als auch die Inkrustation und verhindert wirksam die Wiederverkeimung des Wassers, da die Kavitation geeignet ist, den AOC-Wert (AOC - Assimilable Organic Carbon) dauerhaft zu reduzieren. Auf Grund der ständigen Nährstoffarmut sterben die Legionellen und Amöben auch in den Totleitungen ab. Die Kavitation ist weiters geeignet, auch Bakterien zu zerstören, die sich im VBNC Zustand befinden, d.h. einem Zustand, in dem die Bakterien sonst annehmen würden, um unter widrigen Umgebungsbedingungen zu überleben (VBNC - Viable but nonculturable).

Die erfindungsgemäße doppelte Barriere für biologische Verunreinigungen arbeitet unabhängig von der jeweiligen Betriebstemperatur, was den Vorteil mit sich bringt, dass eine für zentrale Energieversorger günstige Betriebsweise ermöglich wird, bei der die Energieeffizienz durch hohe Vorlauf- und niedrigere Rücklauftemperaturen erhöht wird.

Eine bevorzugte Weiterbildung sieht vor, dass die wenigstens eine Ultrafiltrationseinheit der Kavitationseinheit in Strömungsrichtung unmittelbar vor- oder nachgeordnet ist. Das Vorsehen einer unmittelbar nachgeordneten Ultrafiltrationseinheit ist hierbei besonders bevorzugt, da die durch die Kavitationseinheit ggf. erzeugten Inkrustationspartikel sofort abgetrennt werden können.

Bevorzugt ist eine Partikelfilterung der Kavitationseinheit in Strömungsrichtung vorgeordnet und die Ultrafiltrationseinheit ist der Kavitationseinheit in Strömungsrichtung nachgeordnet. Das zusätzliche Vorsehen einer Partikelfilterung bewirkt, dass größere Partikel bereits vor der Kavitationseinheit abgetrennt werden können.

In diesem Zusammenhang kann bevorzugt vorgesehen sein, dass die Partikelfilterung eine Ausschlussgrenze von 20-100 µm, insbesondere 70-90 µm aufweist. Die Ausschlussgrenze ist hierbei definiert als der minimale Partikeldurchmesser, welcher durch die Membran zu 90 % zurückgehalten wird.

Die Ultrafiltrationseinheit weist erfindungsgemäß eine Ausschlussgrenze von 0,01-0,05 µm, insbesondere 0,03 µm auf.

Eine weitere bevorzugte Weiterbildung sieht vor, dass der Kaltwasserzulauf wenigstens einen Eintragsschutz, vorzugsweise eine weitere Filtrationseinheit, insbesondere eine Ultrafiltrationseinheit oder eine rückspülbare Mikrofiltrationseinheit, oder eine Strahlungseinheit, insbesondere eine UV-Strahlungseinheit, aufweist. Durch die weitere Filtrationseinheit werden biologische Verunreinigungen bereits vor der Zufuhr des Kaltwassers in den Zirkulationskreislauf zurückgehalten. Die Effizienz der Wasseraufbereitung wird auf diese Weise erhöht. Auf Grund der Reduktion des Anteils an biologischen Verunreinigungen, die in den Zirkulationskreislauf eingeleitet werden, reicht eine reduzierte Anzahl an Kavitationsbehandlungen in der Kavitationseinheit für eine effiziente Reinigung aus.

Bei einer bevorzugten Ausführungsform des erfindungsgemäßen Wasseraufbereitungssystems umfasst der Kaltwasserzulauf eine Trinkwasserabzweigung, die den Kaltwasserzulauf mit einer Entnahmestelle fluidverbindet. Die Trinkwasserabzweigung kann der weiteren Filtrationseinheit vorgeordnet sein. Da durch die weitere Filtrationseinheit die Temperatur des Warmwassers im Zirkulationskreislauf reduziert werden kann, wird die Erwärmung von parallel zu Zirkulationsleitungen laufenden Trinkwasserleitungen vermieden, so dass das Risiko eines Legionellenwachstums in den Kaltwasser führenden Leitungen bzw. in der Trinkwasserabzweigung reduziert wird. Alternativ kann die Trinkwasserabzweigung auch der Filtrationseinheit nachgeordnet sein. Das bedeutet, dass das gesamte Kaltwasser in der Filtrationseinheit filtriert wird. Auf diese Weise wird auch das in die Trinkwasserabzweigung abgeleitete Kaltwasser, das direkt zur Entnahmestelle geleitet wird, zunächst in der Filtrationseinheit entkeimt.

Vorzugsweise weist der Zirkulationskreislauf einen Vorlauf, der vom Erhitzer zur Entnahmestelle führt und einen Rücklauf auf, der von der Entnahmestelle zum Erhitzer führt. Der Vorlauf und der Rücklauf bilden also gemeinsam den Zirkulationskreislauf, wobei zumindest im Vorlauf durchgehend Warmwasser geführt ist. Der Rücklauf kann abschnittsweise Warmwasser und/oder ein Kaltwasser-/Warmwassergemisch führen.

Der Zirkulationskreislauf kann wenigstens einen Warmwasserspeicher umfassen, der mit dem Rücklauf fluidverbunden ist. Der Warmwasserspeicher kann zusätzlich mit dem Vorlauf verbunden sein. Vorzugsweise umfasst der Warmwasserspeicher eine Entnahmeleitung, die mit dem Vorlauf fluidverbunden ist. Der Warmwasserspeicher bzw. die Entnahmeleitung des Warmwasserspeichers ist also der Entnahmestelle vorgeordnet. Somit bildet der Warmwasserspeicher einen Puffer, wodurch ausreichend Warmwasser bereitsteht, um an der Entnahmestelle entnommen zu werden, selbst wenn die Menge des in den Zirkulationskreislauf geführten Kaltwassers die Menge des entnommenen Warmwassers zeitweise unterschreitet.

Vorteilhafterweise ist die Erfindung sowohl bei Speichersystemen, als auch bei Durchlaufsystemen einsetzbar. Konkret kann das erfindungsgemäße Wasseraufbereitungssystem also mit oder ohne einen Warmwasserspeicher eingesetzt werden. Bei Systemen ohne Warmwasserspeicher, die lediglich einen Durchlauferhitzer umfassen, ist in Abhängigkeit der entnommenen Warmwassermenge an den Entnahmestellen eine reduzierte Anzahl von Kavitationsbehandlungen möglich. Durch die im Zirkulationskreislauf angeordnete Filtrationseinheit und dem ggf. im Kaltwasserzulauf angeordneten Eintragsschutz wird dennoch eine ausreichend hohe Trinkwasserqualität erreicht, da der Eintrag von Keimen, insbesondere Legionellen, verhindert oder zumindest verringert wird. Dasselbe gilt für Speichersysteme, bei denen der Warmwasserspeicher durch erhöhte Entnahmemengen leergelaufen ist.

Bei einer bevorzugten Ausführungsform des erfindungsgemäßen Wasseraufbereitungssystems ist die Kavitationseinheit dem Warmwasserspeicher vorgeordnet. Der Warmwasserspeicher bildet somit mit der Entnahmeleitung, dem Vorlauf und dem Rücklauf einen Behandlungskreislauf, der die Kavitationseinheit umfasst. Auf diese Weise wird das im Behandlungskreislauf bzw. allgemein im Zirkulationskreislauf zirkulierende Warmwasser mehrfach der Kavitationseinheit zugeführt und die Reinigungswirkung somit erhöht. Dadurch, dass die Kavitationseinheit dem Warmwasserspeicher vorgeordnet wird, wird sicher gestellt, dass die gesamte Menge des in den Warmwasserspeicher eingetragenen Warmwassers zumindest einmalig kavitationsbehandelt wird.

Alternativ kann vorgesehen sein, dass der Zirkulationskreislauf eine Bypassleitung umfasst, die den Rücklauf mit dem Warmwasserspeicher fluidverbindet. Die Bypassleitung kann dem Warmwasserspeicher nachgeordnet sein. Das bedeutet, dass die Bypassleitung vom Zirkulationskreislauf an einer Stelle abzweigt, die dem Warmwasserspeicher nachgeordnet ist.

Die Kavitationseinheit kann in der Bypassleitung angeordnet sein. Die Anordnung der Kavitationseinheit in der Bypassleitung hat den Vorteil, dass lediglich ein Teil des Warmwassers kontinuierlich der Kavitationsbehandlung zugeführt wird, wodurch die Energieeffizienz des erfindungsgemäßen Wasseraufbereitungssystems gesteigert wird. Eine derartige Teilbehandlung des Warmwassers ist dabei ausreichend, da durch die Filtrationseinheit im Kaltwasserzulauf bereits die Anzahl an biologischen Verunreinigungen, insbesondere Legionellen, reduziert wird.

Vorzugsweise umfasst das erfindungsgemäße Wasseraufbereitungssystem eine Steuereinrichtung, die mit der Kavitationseinheit und/oder wenigstens einer Pumpe signalverbunden ist. Auf diese Weise kann der Erfolg der Reinigungsbehandlung, insbesondere der zweistufigen Reinigungsbehandlung durch die Ultrafiltrationseinheit und die Kavitationseinheit, kontrolliert werden. Die Steuereinheit ermöglicht die Steuerung des Wasseraufbereitungssystems derart, dass die Durchlaufmenge, insbesondere durch die Kavitationseinheit, entsprechend den Messwerten der unterschiedlichen Sensoren, angepasst werden kann. Dazu ist die Steuereinrichtung vorteilhaft mit wenigstens einer Pumpe des Wasseraufbereitungssystems und wenigstens einem Sensor, insbesondere Drucksensor und/oder Durchflusssensor, signalverbunden. Der Druck- und/oder Durchflusssensor dient hierbei der Überwachung der Kavitation.

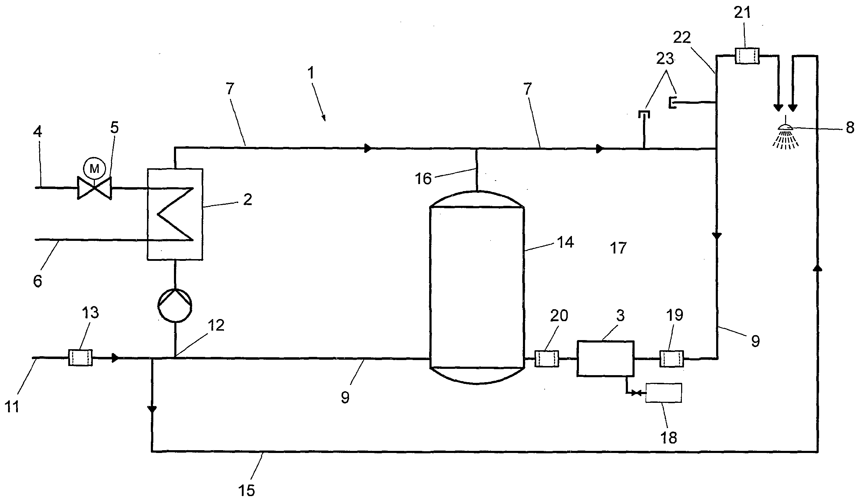

Die Erfindung wird im Folgenden anhand eines in der Zeichnung schematisch dargestellten Ausführungsbeispiels näher erläutert.

Das Wasseraufbereitungssystem umfasst jeweils einen Zirkulationskreislauf 1, der einen Erhitzer 2 und eine Kavitationseinheit 3 aufweist. Der Erhitzer 2 ist dabei als Wärmetauscher, insbesondere Plattenwärmetauscher, ausgeführt. Andere Arten von Erhitzern 2 sind möglich. Der als Wärmetauscher ausgeführte Erhitzer 2 umfasst ferner eine Wärmetauscherzuleitung 4, in der ein Motorventil 5 angeordnet ist, wodurch der Zustrom der Wärmetauscherflüssigkeit regelbar ist. Ferner ist eine Wärmetauscherableitung 6 vorgesehen. Die Wärmetauscherzuleitung 4 und die Wärmetauscherableitung 6 sind durch den Wärmetauscher 2 mit dem Zirkulationskreislauf 1 thermisch gekoppelt. Dabei besteht vorzugsweise keine Fluidverbindung zwischen der Wärmetauscherzuleitung 4 bzw. Wärmetauscherableitung 6 und dem Zirkulationskreislauf 1.

Der Zirkulationskreislauf 1 umfasst ferner einen Vorlauf 7, der den Erhitzer 2 mit einer Entnahmestelle 8 verbindet. Ferner ist die Entnahmestelle 8 mit dem Erhitzer 2 wiederum durch einen Rücklauf 9 des Zirkulationskreislaufs 1 gekoppelt. Im Rücklauf 9 des Zirkulationskreislaufs 1 die Kavitationseinheit 3 angeordnet.

Weiters ist ein Kaltwasserzulauf 11 vorgesehen, der mit dem Zirkulationskreislauf 1 verbunden ist bzw. bei 12 in diesen mündet. Dabei ist der Kaltwasserzulauf 11 dem Erhitzer 2 in Strömungsrichtung vorgeordnet. Das bedeutet, dass der Kaltwasserzulauf 11 derart angeordnet ist, dass das Kaltwasser unmittelbar vor dem Erhitzer 2 in den Zirkulationskreislauf 1, insbesondere den Rücklauf 9, eingeleitet wird. Im Kaltwasserzulauf 11 ist eine Ultrafiltrationseinheit 13 angeordnet. Die Ultrafiltrationseinheit 13 umfasst einen Ultrafilter, der angepasst ist, biologische Verunreinigungen, insbesondere Bakterien und/oder Viren, besonders bevorzugt Legionellen, aus dem Kaltwasser zu filtern. Der Ultrafilter weist dabei eine Filterstruktur auf, die eine Filtration von Partikeln ermöglicht, die höchstens 0,05 µm, insbesondere höchstens 0,04 µm, insbesondere höchstens 0,035 µm, insbesondere 0,03 µm, beträgt.

Das Ausführungsbeispiel kann als Durchlaufsystem ausgebildet sein, wenn auf den Warmwasserspeicher 14 verzichtet wird. Das bedeutet, dass der Erhitzer 2 im Wesentlichen einen Durchlauferhitzer bildet. Die an der Entnahmestelle 8 entnommene Warmwassermenge wird also zweckmäßigerweise zu gleichen Teilen über den Kaltwasserzulauf 11 in den Zirkulationskreislauf 1 nachgeführt. Bei Entnahme von Warmwasser an der Entnahmestelle 8 wird also ein Teil des Kaltwassers, das über den Kaltwasserzulauf 11 vor dem Erhitzer 2 in den Zirkulationskreislauf 1, insbesondere den Rücklauf 9 geleitet wird, direkt über die Entnahmestelle 8 abgeführt, ohne eine Kavitationsbehandlung in der Kavitationseinheit 3 zu erfahren. Durch die im Kaltwasserzulauf 11 angeordnete Ultrafiltrationseinheit 13 wird jedoch ein Eintrag von biologischen Verunreinigungen, insbesondere eine Legionellenbelastung, vermieden. Wenn die Entnahmestelle 8 geschlossen ist, zirkuliert das Warmwasser im Zirkulationskreislauf 1 und wird kontinuierlich der Kavitationseinheit 3 zugeführt.

Der Kavitationseinheit 3 ist hierbei bevorzugt eine erste Kavitatorpumpe (nicht dargestellt) vorgeordnet. Eine zweite Kavitatorpumpe (nicht dargestellt) ist dem Kavitator 3 nachgeordnet. Zwischen dem Kavitator 3 und der zweiten Kavitatorpumpe kann ferner ein Drucksensor (nicht dargestellt) angeordnet sein. Die erste Kavitatorpumpe, die zweite Kavitatorpumpe und der Drucksensor sind dann mit einer Steuereinheit signalverbunden. Die Steuereinheit umfasst ferner eine Signalkopplung zu einem Vorlauftemperatursensor (nicht dargestellt), der im Vorlauf 7 des Zirkulationskreislaufs 1 angeordnet ist. Anhand der Messdaten des Vorlauftemperatursensors und des Drucksensors steuert die Steuereinheit die erste Kavitatorpumpe und/oder die zweite Kavitatorpumpe, so dass bei hoher Energieeffizienz gleichzeitig eine sichere Entkeimung in der Kavitationseinheit 2 ermöglicht wird. Die Kavitationseinheit 2 kann ferner eine Entgasung umfassen, über die aus dem behandelten Warmwasser ausgasende Bestandteile abgeführt werden können. Weiters kann an die Kavitationseinheit 3 eine Ozonquelle 18 angeschlossen sein, um das die Kavitationseinheit 3 passierende Wasser zusätzlich einer chemischen Behandlung mittels Ozon zu unterwerfen.

Bei dem Ausführungsbeispiel ist vorgesehen, dass die Ultrafiltrationseinheit 13 im Kaltwasserzulauf 11 der Trinkwasserabzweigung 15 vorgeordnet ist. Es wird also das gesamte Kaltwasser im Kaltwasserzulauf 11 ultrafiltriert und anschließend aufgeteilt, wobei ein erster Kaltwasseranteil dem Zirkulationskreislauf 1 zur Warmwasserbereitung zugeführt und ein zweiter Kaltwasseranteil über die Trinkwasserabzweigung 15 der Entnahmestelle 8 zugeführt wird.

Bei einer alternativen Ausführung ist das Wasseraufbereitungssystem als Speichersystem ausgeführt. Das bedeutet, dass das Wasseraufbereitungssystem einen Warmwasserspeicher 14 umfasst. Der Warmwasserspeicher 14 dient dabei als Puffer, so dass ausreichend Warmwasser bereitsteht, selbst wenn die Menge des an der Entnahmestelle 8 entnommenen Warmwassers die Menge des nachgeführten Kaltwassers übersteigt. Der Warmwasserspeicher 14 ist im Rücklauf 9 zwischen der Kavitationseinheit 3 und dem Kaltwasserzulauf 1 angeordnet. Der Warmwasserspeicher 14 ist durch eine Entnahmeleitung 16 mit dem Vorlauf 7 des Zirkulationskreislaufs 1 gekoppelt.

Der Warmwasserspeicher 14 bildet mit der Entnahmeleitung 16, dem Vorlauf 7 und dem Rücklauf 9 einen Behandlungskreislauf 17, der die Kavitationseinheit 3 umfasst. Der Behandlungskreislauf 17 ist Bestandteil des Zirkulationskreislaufs 1 und im Wesentlichen als zusätzlicher, untergeordneter Zirkulationskreislauf ausgebildet. Das bedeutet, dass die Kavitatorpumpen das Warmwasser kontinuierlich zwischen dem Warmwasserspeicher 14 und der Kavitationseinheit 3 umwälzen, so dass eine im Wesentlichen durchgehende Kavitationsbehandlung des Warmwassers erfolgt.

Erfindungsgemäß ist der Kavitationseinheit 3 eine Ultrafiltrationseinheit 20 nachgeordnet, die ausgebildet ist, um Inkrustationspartikel und biologische Verunreinigungen des aus der Kavitationseinheit 3 kommenden Wassers abzutrennen. Die Ultrafiltrationseinheit 20 weist dabei eine Filterstruktur, insbesondere eine Filtermembran auf, die eine Filtration von Partikeln mit einer Ausschlussgrenze von 0,05-0,01 µm, insbesondere 0,03 µm aufweist. Die Ausschlussgrenze ist hierbei definiert als der minimale Partikeldurchmesser, welcher durch die Membran zu 90 % zurückgehalten wird.

Eine Vorfilterung kann mittels der der Kavitationseinheit 3 vorgeordneten Filtereinheit 19 erfolgen. Die Filtereinheit 19 ist hierbei bevorzugt als Mikrofilter ausgebildet. Insbesondere weist die Filtereinheit eine Ausschlussgrenze von 20-100 µm, insbesondere 70-90 µm auf.

Eine weitere Reduzierung der Keimbelastung des Wassers kann durch die Anordnung einer Ultrafiltrationseinheit 21 in der Warmwasserleitung direkt vor der Entnahmestelle 8 erreicht werden.

## Patentansprüche

1. Wasseraufbereitungssystem mit einem Kaltwasserzulauf, der in einen Zirkulationskreislauf mündet, wobei der Zirkulationskreislauf wenigstens einen Erhitzer und wenigstens eine Kavitationseinheit umfasst, wobei der Kaltwasserzulauf dem Erhitzer in Strömungsrichtung vorgeordnet ist, **dadurch gekennzeichnet, dass** wenigstens eine Ultrafiltrationseinheit mit einer Ausschlussgrenze von 0,01-0,05 µm, insbesondere 0,03 µm, im Zirkulationskreislauf (1) angeordnet ist.

2. Wasseraufbereitungssystem nach Anspruch 1, **dadurch gekennzeichnet, dass** die wenigstens eine Ultrafiltrationseinheit (20) der Kavitationseinheit (3) in Strömungsrichtung unmittelbar vor- oder nachgeordnet ist.

3. Wasseraufbereitungssystem nach Anspruch 1 oder 2, **dadurch gekennzeichnet, dass** der Kaltwasserzulauf (11) wenigstens eine weitere Filtrationseinheit, insbesondere eine Ultrafiltrationseinheit oder eine rückspülbare Mikrofiltrationseinheit, oder eine Strahlungseinheit, insbesondere eine UV-Strahlungseinheit, aufweist.

4. Wasseraufbereitungssystem nach einem der Ansprüche 1 bis 3, **dadurch gekennzeichnet, dass** der Kaltwasserzulauf (11) eine Trinkwasserabzweigung (15) umfasst, die den Kaltwasserzulauf (11) mit einer Entnahmestelle (8) fluidverbindet.

5. Wasseraufbereitungssystem nach Anspruch 4, **dadurch gekennzeichnet, dass** die Trinkwasserabzweigung (15) der weiteren Filtrationseinheit (13) nachgeordnet ist.

6. Wasseraufbereitungssystem nach einem der Ansprüche 1 bis 5, **dadurch gekennzeichnet, dass** der Zirkulationskreislauf (1) einen Vorlauf (7), der vom Erhitzer (2) zur Entnahmestelle (8) führt, und einen Rücklauf (9) aufweist, der von der Entnahmestelle (8) zum Erhitzer (2) führt.

7. Wasseraufbereitungssystem nach Anspruch 6, **dadurch gekennzeichnet, dass** der Zirkulationskreislauf (1) wenigstens einen Warmwasserspeicher (14) umfasst, der mit dem Rücklauf (9) fluidverbunden ist, wobei die Kavitationseinheit (3) dem Warmwasserspeicher (14) in Strömungsrichtung bevorzugt vorgeordnet ist.

8. Wasseraufbereitungssystem nach Anspruch 7, **dadurch gekennzeichnet, dass** der Zirkulationskreislauf (1) eine Bypassleitung umfasst, die den Rücklauf (9) mit dem Warmwasserspeicher (14) fluidverbindet.

9. Wasseraufbereitungssystem nach Anspruch 8, **dadurch gekennzeichnet, dass** die Kavitationseinheit (3) in der Bypassleitung angeordnet ist.

## Claims

1. Water treatment system with a cold water inlet, which opens into a circulation circuit, the circulation circuit comprising at least one heater and at least one cavitation unit, the cold water inlet being arranged upstream of the heater in the direction of flow, **characterized in that** at least one ultrafiltration unit with an exclusion limit of 0.01-0.05 microns, in particular 0.03 microns, is arranged in the circulation circuit (1).

2. Water treatment system according to claim 1, **characterized in that** the at least one ultrafiltration unit (20) is arranged directly upstream or downstream of the cavitation unit (3) in the direction of flow.

3. Water treatment system according to claim 1 or 2, **characterized in that** the cold water inlet (11) has at least one further filtration unit, in particular an ultrafiltration unit or a backwashable microfiltration unit, or a radiation unit, in particular a UV radiation unit.

4. Water treatment system according to any one of claims 1 to 3, **characterized in that** the cold water inlet (11) comprises a drinking water branch (15) which fluidly connects the cold water inlet (11) to an extraction point (8).

5. Water treatment system according to claim 4, **characterized in that** the drinking water branch (15) is arranged downstream of the further filtration unit (13).

6. Water treatment system according to any one of claims 1 to 5, **characterized in that** the circulation circuit (1) has a flow (7) which leads from the heater (2) to the extraction point (8) and a return (9) which runs from the extraction point (8) to the heater (2).

7. Water treatment system according to claim 6, **characterized in that** the circulation circuit (1) comprises at least one hot water tank (14) which is fluidly connected to the return (9), the cavitation unit (3) preferably being arranged upstream of the hot water tank (14) in the direction of flow.

8. Water treatment system according to claim 7, **characterized in that** the circulation circuit (1) comprises a bypass line which fluidly connects the return (9) to the hot water tank (14).

9. Water treatment system according to claim 8, **characterized in that** the cavitation unit (3) is arranged in the bypass line.

## Revendications

1. Système de traitement de l'eau, comportant une admission d'eau froide, qui débouche dans un circuit de circulation, le circuit de circulation comportant au moins un réchauffeur et au moins une unité de cavitation, l'admission d'eau froide étant montée en amont du réchauffeur par référence au sens de circulation, **caractérisé en ce qu'**au moins une unité d'ultrafiltration ayant une limite d'exclusion de 0,01 - 0,05 µm, en particulier 0,03 µm, est prévue dans le circuit de circulation (1).

2. Système de traitement de l'eau selon la revendication 1, **caractérisé en ce que** l'au moins une unité d'ultrafiltration (20) est montée directement en amont ou en aval de l'unité de cavitation (3) par référence au sens de circulation.

3. Système de traitement de l'eau selon la revendication 1 ou 2, **caractérisé(e) en ce que** l'admission d'eau froide (11) comporte au moins une unité de filtration additionnelle, en particulier une unité d'ultrafiltration ou une unité de microfiltration à rétrolavage, ou une unité de rayonnement, en particulier une unité de rayonnement UV.

4. Système de traitement de l'eau selon l'une des revendications 1 à 3, **caractérisé en ce que** l'admission d'eau froide (11) comporte un embranchement d'eau potable (15), qui réalise une liaison fluidique entre l'admission d'eau froide (11) et un point de soutirage (8).

5. Système de traitement de l'eau selon la revendication 4, **caractérisé en ce que** l'embranchement d'eau potable (15) est monté en aval de l'unité de filtration additionnelle (13).

6. Système de traitement de l'eau selon l'une des revendications 1 à 5, **caractérisé en ce que** le circuit de circulation (1) comporte une conduite d'entrée (7), qui mène du réchauffeur (2) vers le point de soutirage (8), et une conduite de retour (9), qui mène du point de soutirage (8) vers le réchauffeur (2).

7. Système de traitement de l'eau selon la revendication 6, **caractérisé en ce que** le circuit de circulation (1) comporte au moins un réservoir d'eau chaude (14), qui est en liaison fluidique avec la conduite de retour (9), l'unité de cavitation (3) étant de préférence montée en amont du réservoir d'eau chaude (14) par référence au sens de circulation.

8. Système de traitement de l'eau selon la revendication 7, **caractérisé en ce que** le circuit de circulation (1) comporte un by-pass qui réalise la liaison fluidique entre la conduite de retour (9) et le réservoir d'eau chaude (14).

9. Système de traitement de l'eau selon la revendication 8, **caractérisé en ce que** l'unité de cavitation (3) est prévue dans le by-pass.
